(19) Europäisches Patentamt
European Patent Office
Office européen des brevets

(11) **EP 2 734 381 B1**

(12) **EUROPÄISCHE PATENTSCHRIFT**

(45) Veröffentlichungstag und Bekanntmachung des Hinweises auf die Patenterteilung:
**20.05.2020  Patentblatt 2020/21**

(21) Anmeldenummer: **12743372.0**

(22) Anmeldetag: **19.07.2012**

(51) Int Cl.:
*G02B 5/26* (2006.01)      *G02B 5/28* (2006.01)
*B42D 25/29* (2014.01)     *B42D 25/45* (2014.01)
*B42D 25/00* (2014.01)

(86) Internationale Anmeldenummer:
**PCT/EP2012/003059**

(87) Internationale Veröffentlichungsnummer:
**WO 2013/010672 (24.01.2013 Gazette 2013/04)**

(54) **OPTISCH VARIABLES ELEMENT, INSBESONDERE SICHERHEITSELEMENT**

OPTICALLY VARIABLE ELEMENT, IN PARTICULAR A SECURITYELEMENT

ELEMENT OPTIQUEMENT VARIABLE, EN PARTICULIER UN ELEMENT DE SECURITE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2011  DE 102011108242**

(43) Veröffentlichungstag der Anmeldung:
**28.05.2014  Patentblatt 2014/22**

(73) Patentinhaber: **Giesecke+Devrient Currency Technology GmbH**
**81677 München (DE)**

(72) Erfinder: **FUHSE, Christian**
**83624 Otterfing (DE)**

(56) Entgegenhaltungen:
**EP-A2- 1 547 807     US-A1- 2007 291 362**

**Beschreibung**

Die Erfindung betrifft ein optisch variables Element, insbesondere ein Sicherheitselement, das z.B. für einen Datenträger verwendet werden kann.

Datenträger, wie Wert- und Ausweisdokumente, oder Wertgegenstände, wie etwa Markenartikel, werden zur Absicherung oft mit einem optisch variablen Element versehen, das eine Überprüfung der Echtheit des Datenträgers gestattet und das zugleich als Schutz vor unerlaubter Reproduktion dient. Dazu weist das optisch variable Element einen optischen Effekt auf, der beispielsweise bei Änderung der Betrachtungsrichtung variiert und nicht mit herkömmlichen Kopiergeräten kopiert werden kann.

Ein Sicherheitselement mit einer flächigen Beugungsstruktur, die mit einer zumindest zwei Schichten umfassenden Schichtenfolge kombiniert ist, ist in der Druckschrift EP 1 547 807 offenbart. Die Schichtenfolge enthält eine semitransparente Metallschicht und einer hochbrechende Schicht.

Die Druckschrift US 2007/0291362 beschreibt eine Sicherheitsvorrichtung mit einer optisch variablen Vorrichtung, die eine beugungsbasierte Mikrooptik zur Moire-vergrößerten visuellen Darstellung eines Mikroobjekts enthält. Zusätzlich zur Vergrößerung der Mikroobjekte kann die Beugungsstruktur weitere optische Effekte bereitstellen.

Ausgehend davon liegt der Erfindung die Aufgabe zugrunde, ein optisch variables Element, insbesondere ein Sicherheitselement, anzugeben, das eine hohe Fälschungssicherheit mit guter Erkennbarkeit und leichter Verifizierbarkeit verwendet.

Die Aufgabe wird gelöst durch ein optisch variables Element, insbesondere Sicherheitselement, mit einer transparenten Trägerschicht, einer zumindest teiltransparenten Reflexionsschicht, die auf der Trägerschicht gebildet ist, und einer transparenten Einbettungsschicht, die auf der Reflexionsschicht gebildet ist, wobei die Reflexionsschicht in einem Motivbereich derart strukturiert ist, dass sie eine Vielzahl von teiltransparenten Mikrospiegeln bildet, die aufgrund von gerichteter Reflexion von einfallendem Licht bei Aufsicht auf den Motivbereich ein wahrnehmbares Motiv darbieten, und wobei sich die Brechungsindizes der Träger- und der Einbettungsschicht im sichtbaren Spektrum um nicht mehr als 0,2 unterscheiden, damit das in Aufsicht wahrnehmbare Motiv in Durchsicht des Motivbereiches nicht zu erkennen ist.

Damit wird für einen Betrachter der überraschende Effekt bereitgestellt, dass er zwar in Aufsicht ein Motiv erkennt, in Durchsicht jedoch dieses Motiv für ihn verschwindet. Diesen optischen Effekt kann man als durchsichtiges "Antiwasserzeichen" bezeichnen.

Bei dem erfindungsgemäßen Element können sich die Brechungsindizes der Träger- und der Einbettungsschicht im sichtbaren Spektrum um nicht mehr als 0,1 und insbesondere um nicht mehr als 0,05 unterscheiden. In diesem Fall kann das Verschwinden des Motivs in Durchsicht gut sichergestellt werden.

Unter dem Verschwinden des Motivs in Durchsicht wird hier insbesondere verstanden, dass z.B. auch ein in einem gewissen Abstand hinter dem optisch variablen Element befindliches Bild durch den Motivbereich weitgehend unverzerrt sichtbar ist und dabei das in Aufsicht wahrnehmbare Motiv quasi nicht mehr erkennbar ist. Die Brechungseffekte der teiltransparenten Mikrospiegel in Durchsicht führen somit erfindungsgemäß zu keiner Erkennbarkeit des Motivs. Dies wird durch die sehr ähnlichen Brechungsindizes der Träger- und der Einbettungsschicht erreicht, wodurch das transmittierte Licht zwar einen geringen lateralen Versatz durch Brechung an den teiltransparenten Mikrospiegeln erfährt, aber die Ausbreitungsrichtung des Lichts nicht oder nicht merklich geändert wird. Der Motivbereich wirkt in Durchsicht quasi wie eine planparallele Platte.

Bei dem optisch variablen Element kann die der Reflexionsschicht abgewandte Oberseite der Einbettungsschicht nicht dem Relief der Mikrospiegel folgen. Besonders bevorzugt ist die Oberseite plan ausgebildet. Dies führt zu einem Schutz gegen unerwünschte Abformungen und somit gegen unerwünschtes Kopieren des optisch variablen Elementes. Ebenso kann die der Reflexionsschicht abgewandte Unterseite der Trägerschicht nicht dem Relief der Mikrospiegel folgen.

Ferner kann bei dem erfindungsgemäßen optisch variablen Element die Reflexionsschicht eine dielektrische Schicht sein, deren Brechungsindex sich in zumindest einem Teil des sichtbaren Spektrums jeweils um mehr als 0,2 vom Brechungsindex der Trägerschicht und vom Brechungsindex der Einbettungsschicht unterscheidet. Bevorzugt kann der Unterschied > 0,3 und besonders bevorzugt > 0,5 sein.

Die Vielzahl der teiltransparenten Mikrospiegel kann so ausgebildet sein, dass aufgrund von gerichteter Reflexion von einfallendem Licht bei Aufsicht auf den Motivbereich aus unterschiedlichen Blickrichtungen mindestens zwei verschiedene Motive dargeboten werden.

Ferner können bei dem erfindungsgemäßen optisch variablen Element die minimalen lateralen Abmessungen der Mikrospiegel > 1 $\mu$m sein. Bevorzugt liegen sie im Bereich von 3 bis 300 $\mu$m, insbesondere im Bereich von 4 bis 50 $\mu$m und besonders bevorzugt im Bereich von 5 bis 20 $\mu$m.

Die Mikrospiegel können ein zumindest lokal periodisches Sägezahngitter oder ein Facettenraster bilden. Ferner ist es möglich, dass die Reflexionsschicht nur bereichsweise und/oder mit bereichsweise unterschiedlichem Schichtaufbau vorliegt.

Ferner kann die Reflexion an der Reflexionsschicht bereichsweise durch ein Antireflexrelief, insbesondere ein Sub-Wellenlängengitter oder Mottenaugenstrukturen, zumindest verringert, bevorzugt nahezu vollständig unterdrückt werden.

Ferner ist es möglich, dass die Reflexionsschicht eine bereichsweise unterschiedliche Schichtdi-

Die Reflexionsschicht kann durch eine oder mehrere hochbrechende Schicht(en) gebildet sein, die zumindest in einem Teil des sichtbaren Spektrums einen Brechungsindex von > 1,7, bevorzugt von > 1,8 und besonders bevorzugt von > 2 aufweist.

Bei dem erfindungsgemäßen optisch variablen Element kann die Dicke der Reflexionsschicht so gewählt sein, dass aufgrund von Interferenz des an den Grenzflächen der Reflexionsschicht reflektierten Lichtes das in Aufsicht wahrnehmbare Motiv farbig dargeboten ist.

Insbesondere kann die Schichtdicke z der Reflexionsschicht für eine hohe Reflektivität bei einer gewünschten Wellenlänge $\lambda$ im sichtbaren Spektralbereich so gewählt sein, dass die folgende Gleichung

$$z = \frac{(m+1/2)}{2n_R}\lambda$$

erfüllt ist, wobei m ein ganzzahliger Wert von 1 bis 4 und $n_R$ der Brechungsindex der Reflexionsschicht ist. Bevorzugt ist die Schichtdicke z der Reflexionsschicht so gewählt, dass die Gleichung für z für m = 2 erfüllt ist.

Bei dem erfindungsgemäßen optisch variablen Element kann/ können die Reflexionsschicht(en) in Reflexion eine Buntheit $C_{ab}* = \sqrt{a*^2 + b*^2}$ von mehr als 40, bevorzugt mehr als 50 und besonders bevorzugt mehr als 60 aufweisen. Zur Bewertung der Farben bzw. Buntheit wird dazu das CIE L\*a\*b\* Farbsystem benutzt und von einer Beleuchtung mit einer D65 Normlichtquelle ausgegangen.

Ferner kann die mindestens eine der Reflexionsschichten eine Schichtdicke entsprechend der optischen Weglänge $zn_R$ (wobei z die Schichtdicke der Reflexionsschicht und $n_R$ der Brechungsindex der Reflexionsschicht ist) zwischen 285 nm und 1755 nm, bevorzugt zwischen 475 nm und 1365 nm und besonders bevorzugt zwischen etwa 500 nm und 1100 nm aufweisen. Wenn die Reflexionsschicht durch drei Schichten gebildet ist, ist es bevorzugt, dass die beiden äußeren Schichten jeweils eine solche optische Weglänge aufweisen.

Ferner kann bei dem erfindungsgemäßen optischen Element die Dicke der Reflexionsschicht so gewählt sein, dass aufgrund von Interferenzen des an den Grenzflächen der Reflexionsschicht reflektierten Lichtes das in Aufsicht wahrnehmbare Motiv weiß dargeboten wird. Insbesondere kann die Dicke der Reflexionsschicht so gewählt sein, dass die entsprechende optische Weglänge zwischen 115 und 135 nm liegt. Bevorzugt beträgt die optische Weglänge 125 nm.

Bei dem optisch variablen Element kann die Reflexionsschicht einen Dreischichtaufbau mit zwei Außenschichten und einer dazwischen angeordneten Abstandschicht aufweisen, wobei die Brechungsindizes der Außenschichten gleich sind. Insbesondere können die Brechungsindizes der Außenschichten größer sein als der Brechungsindex der Abstandsschicht.

Das optisch variable Element kann insbesondere als Sicherheitsfaden, Aufreißfaden, Sicherheitsband, Sicherheitsstreifen, Patch oder als Etikett zum Aufbringen auf einen Datenträger, wie z.B. ein Sicherheitspapier, Wertdokumente oder der gleichen, ausgebildet sein. Insbesondere kann das optisch variable Element transparente oder zumindest transluzente Bereiche oder Ausnehmungen überspannen.

Unter dem Begriff Sicherheitspapier wird hier insbesondere die noch nicht umlauffähige Vorstufe zu einem Wertdokument verstanden, die neben dem erfindungsgemäßen optisch variablen Element beispielsweise auch weitere Echtheitsmerkmale, wie z.B. im Volumen vorgesehene Lumineszenzstoffe, aufweisen kann. Unter Wertdokumenten werden hier einerseits aus Sicherheitspapieren hergestellte Dokumente verstanden. Andererseits können Wertdokumente auch sonstige Dokumente oder Gegenstände sein, die mit dem erfindungsgemäßen optisch variablen Element versehen werden können, damit die Wertdokumente nicht kopierbare Echtheitsmerkmale aufweisen, wodurch eine Echtheitsprüfung möglich ist und zugleich ein unerwünschtes Kopieren verhindert wird.

Es wird ferner bereitgestellt ein Datenträger mit einem erfindungsgemäßen optisch variablen Element (einschließlich seiner Weiterbildung). Bei dem Datenträger kann es sich z.B. um ein Wert-, Ausweisdokument, Sicherheitspapier oder einen anderen Wertgegenstand handeln.

Es wird ferner bereitgestellt ein optisch variables Element gemäß einer zweiten Variante, insbesondere Sicherheitselement, mit einer Trägerschicht, einer Reflexionsschicht, die auf der Trägerschicht gebildet ist, wobei die Reflexionsschicht in einem Motivbereich aufgrund ihrer Strukturierung eine Vielzahl von Mikrospiegeln aufweist, die aufgrund von gerichteter Reflexion von einfallendem Licht bei Aufsicht auf den Motivbereich ein wahrnehmbares Motiv darbieten, und wobei die Dicke der Reflexionsschicht so gewählt ist, dass aufgrund von Interferenz des an den Grenzflächen der Reflexionsschicht reflektierten Lichtes das in Aufsicht wahrnehmbare Motiv farbig bzw. bunt, insbesondere einfarbig, dargeboten ist.

Mit einem solchen optisch variablen Element gemäß der zweiten Variante kann eine ausgezeichnete farbige Darstellung realisiert werden.

Bei dem optisch variablen Element gemäß der zweiten Variante kann die Schichtdicke z der Reflexionsschicht für eine gewünschte Wellenlänge $\lambda$ so gewählt sein, dass die folgende Gleichung

$$z = \frac{(m+1/2)}{2n_R}\lambda$$

erfüllt ist, wobei m ein ganzzahliger Wert von 1 bis 4 und $n_R$ der Brechungsindex der Reflexionsschicht ist. Insbesondere kann die obige Gleichung für z für m = 2 erfüllt sein.

Das optisch variable Element gemäß der zweiten Variante kann in gleicher Weise weitergebildet werden wie das oben beschriebene optisch variable Element, bei dem der Motivbereich auch eine Durchsicht ermöglicht. Auch das optisch variable Element gemäß der zweiten Variante kann eine Durchsicht ermöglichen, es kann jedoch auch so ausgebildet sein, dass keine unverzerrte Durchsicht oder überhaupt keine Durchsicht möglich ist.

Insbesondere kann das optisch variable Element gemäß der zweiten Variante eine transparente Einbettungsschicht aufweisen, die auf der Reflexionsschicht gebildet ist.

Ferner kann die Reflexionsschicht als einzelne Reflexionsschicht ausgebildet sein. Es ist jedoch auch möglich, dass die Reflexionsschicht mehrschichtig ist. Die Reflexionsschicht(en) kann in Reflexion eine Buntheit $C_{ab}* = \sqrt{a*^2 + b*^2}$ von mehr als 40, bevorzugt mehr als 50 und besonders bevorzugt von mehr als 60 aufweisen.

Ferner kann mindestens eine der Reflexionsschichten eine Schichtdicke entsprechend einer optischen Weglänge $zn_R$ (z = Schichtdicke, $n_R$ = Brechungsindex der Reflexionsschicht) zwischen 285 nm und 1755 nm, bevorzugt zwischen 475 nm und 1365 nm und besonders bevorzugt zwischen etwa 500 nm und 1100 nm aufweisen. Wenn die Reflexionsschicht durch drei Schichten gebildet ist, werden die beiden äußeren bevorzugt eine solche Schichtdicke entsprechend der angegebenen optischen Weglänge aufweisen.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielshalber anhand der beigefügten Zeichnungen, die auch erfindungswesentliche Merkmale offenbaren, noch näher erläutert. Zur besseren Anschaulichkeit wird in den Figuren auf eine maßstabs- und proportionsgetreue Darstellung verzichtet. Es zeigen:

Fig. 1    eine Draufsicht einer Banknote mit einem erfindungsgemäßen optisch variablen Element 1;

Fig. 2    eine vergrößerte Schnittansicht des optisch variablen Elements 1 zur Erläuterung des in Aufsicht dargebotenen Motivs;

Fig. 3    eine Schnittansicht des optisch variablen Elementes gemäß Fig. 2 zur Erläuterung des Verschwindens des Motivs in Durchsicht;

Fig. 4    eine Schnittansicht eines ähnlichen optisch variablen Elementes zur Erläuterung des Verschwindens des Motivs in Durchsicht bei dem erfindungsgemäßen optisch variablen Element 1;

Fig. 5    die Wellenlängenabhängigkeit des Reflexionsgrades R des optisch variablen Elements gemäß Fig. 2 und 3 für verschiedene Schichtdicken z der Reflexionsschicht 6;

Fig. 6    ein Diagramm zur Buntheit C* des optisch variablen Elementes gemäß Fig. 2 in Abhängigkeit der Schichtdicke z der Reflexionsschicht 6 in Reflexion;

Fig. 7    ein Diagramm des Transmissionsgrades T in Abhängigkeit der Wellenlänge für ein optisch variables Element gemäß Fig. 2 für verschiedene Schichtdicken z der Reflexionsschicht 6;

Fig. 8    ein Diagramm zur Darstellung der Buntheit C* des optisch variablen Elementes von Fig. 2 in Abhängigkeit der Schichtdicke z der Reflexionsschicht 6 in Transmission;

Fig. 9    eine Schnittansicht einer weiteren Ausführungsform des erfindungsgemäßen optisch variablen Elementes 1;

Fig. 10   ein Diagramm der Buntheit C* der Reflexionsschicht 19 des optisch variablen Elementes gemäß Fig. 9 in Abhängigkeit der Schichtdicke z in Reflexion;

Fig. 11   ein Diagramm des Reflexionsgrades R des optisch variablen Elements 1 gemäß Fig. 9 in Abhängigkeit der Wellenlänge für verschiedene Schichtdicken z;

Fig. 12   ein Diagramm für die Werte a* und b* des CIE L*a*b* Farbsystems für verschiedene Schichtdicken der Reflexionsschicht 6 gemäß der Ausführungsform von Fig. 2;

Fig. 13   ein Diagramm für die Werte a* und b* des CIE L*a*b* Farbsystems für verschiedene Schichtdicken der Reflexionsschicht 16, 18 gemäß der Ausführungsform von Fig. 9;

Fig. 14   ein Diagramm der Helligkeit L* und der Buntheit C* bei Reflexion in Abhängigkeit der Schichtdicke z der Reflexionsschicht 6 für das optisch variable Element gemäß Fig. 2, und

Fig. 15   eine Schnittansicht einer weiteren Ausführungsform des erfindungsgemäßen optisch variablen Elementes 1.

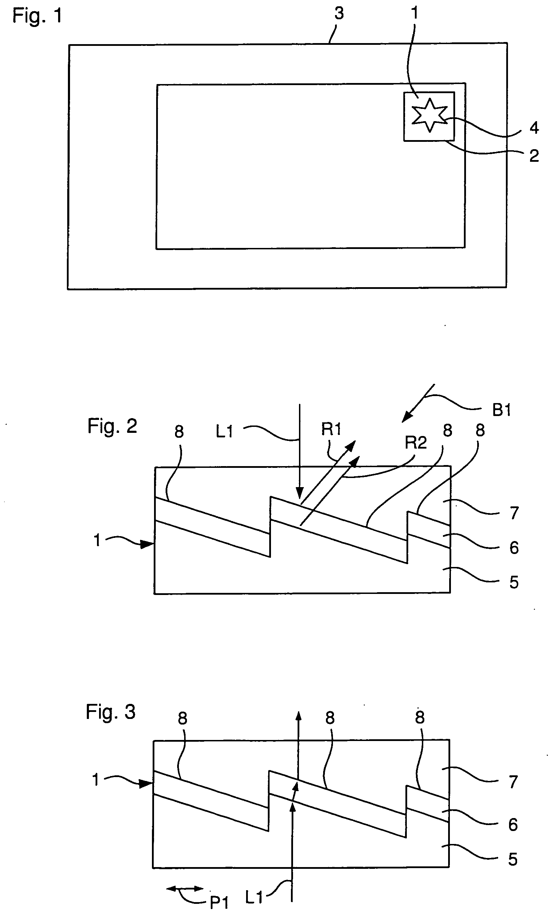

Bei der in Fig. 1 gezeigten Ausführungsform ist das erfindungsgemäße optisch variable Element 1 in einem Fenster 2 einer Banknote 3 angeordnet und kann daher in Aufsicht sowie in Durchsicht betrachtet werden. Das optisch variable Element 1 dient als Sicherheitselement, um die Echtheit der Banknote 3 überprüfen zu können und kann daher auch als Sicherheitsmerkmal bezeichnet werden.

Wie in der schematischen Darstellung in Fig. 1 gezeigt ist, ist in Aufsicht ein Motiv, hier beispielsweise ein Stern 4, für einen Betrachter wahrnehmbar. In Durchsicht ist dieser Stern 4 jedoch für den Betrachter nicht sichtbar.

Um diesen Effekt bereitstellen zu können, weist das optisch variable Element 1, wie am besten aus der schematischen Schnittdarstellung in Fig. 2 ersichtlich ist, eine transparente Trägerschicht 5, eine teiltransparente Reflexionsschicht 6 sowie eine transparente Einbettungsschicht 7 auf, die in dieser Reihenfolge aufeinander angeordnet sind. Die teiltransparente Reflexionsschicht 6 liegt somit zwischen der transparenten Trägerschicht 5 und der transparenten Einbettungsschicht 7.

Die transparente Trägerschicht 5 ist bei der hier beschriebenen Ausführungsform ein transparenter Prägelack (z.B. ein thermoplastischer oder strahlungshärtender Lack), in dem die Struktur einer Vielzahl von Mikrospiegeln 8 geprägt ist, wobei diese Strukturierung mit der teiltransparenten Reflexionsschicht 6 beschichtet ist, um die gewünschten Mikrospiegel 8 zu bilden. Bei dem hier beschriebenen Ausführungsbeispiel ist eine einzige Reflexionsschicht 6 gebildet. Es ist jedoch auch möglich, mehrere transparente Reflexionsschichten übereinander zu bilden.

Bei der Reflexionsschicht 6 (bzw. den Reflexionsschichten) handelt es sich bevorzugt um eine dielektrische Schicht (bzw. dielektrische Schichten). Diese Schichten können mit einem Dünnfilmverfahren, wie z.B. Elektronenstrahlverdampfen oder Sputtern, auf die strukturierte Trägerschicht 5 aufgebracht werden.

Um unerwünschte Beugungseffekte zu minimieren, sind hier die minimalen lateralen Abmessungen der Mikrospiegel 8 größer und bevorzugt deutlich größer als die maximale Wellenlänge des sichtbaren Lichtes. Unter sichtbarem Licht wird hier insbesondere elektromagnetische Strahlung im Wellenlängenbereich von 380 bis 780 nm verstanden. Bevorzugt betragen daher die minimalen lateralen Abmessungen der Mikrospiegel 8 mindestens 3 $\mu$m, bevorzugt mindestens 5 $\mu$m und besonders bevorzugt mindestens 10 $\mu$m. Die maximalen Prägehöhen der Strukturierung in der transparenten Trägerschicht 5 können weniger als 20 $\mu$m, bevorzugt weniger als 10 $\mu$m und besonders bevorzugt weniger als 4 $\mu$m betragen. Dadurch ist es leicht möglich, die Mikrospiegel 8 in einem möglichst dünnen Schichtverbund einzubetten.

Die Mikrospiegel 8 können in einem regelmäßigen Raster oder auch unregelmäßig angeordnet sein. Ferner ist es möglich, dass die Mikrospiegel 8 auch ein zumindest lokal periodisches Sägezahngitter bilden.

Die Strukturierung der Trägerschicht 5 und somit die Anordnung der Mikrospiegel 8 ist in einem flächigen Motivbereich des optisch variablen Elementes 1 so gewählt, dass in Aufsicht auf den Motivbereich (bei einer Blickrichtung B1 und einer einfallenden Lichtrichtung L1 gemäß Fig. 2) für einen Betrachter ein Motiv (hier der Stern 4) wahrnehmbar ist, wie durch die Pfeile R1 und R2 für das reflektierte Licht angedeutet ist.

Da die transparente Trägerschicht 5 und die transparente Einbettungsschicht 7 in dem hier beschriebenen Ausführungsbeispiel den gleichen Brechungsindex aufweisen, heben sich die Richtungsänderungen durch Brechung des einfallenden Lichtes an der Grenzfläche zwischen der Oberseite der Reflexionsschicht 6 und der Trägerschicht 5 einerseits und an der Grenzfläche zwischen der Unterseite der Reflexionsschicht 6 und der transparenten Einbettungsschicht 7 andererseits auf, so dass bei Transmission das Licht L1 nur horizontal versetzt wird (Richtung des Doppelpfeiles P1). Der transmittierte Lichtstrahl behält aber seine Ausbreitungsrichtung bei. Da der horizontale Versatz äußerst gering ist und die Ausbreitungsrichtung beibehalten wird, sind die Mikrospiegel 8 in Durchsicht praktisch nicht mehr erkennbar. Das erfindungsgemäße Sicherheitselement 1 wirkt in Durchsicht wie ein transparentes (eventuell leicht milchiges Fenster), so dass ein Betrachter durch dieses Fenster zwar z.B. einen strukturierten Hintergrund erkennen kann, aber nicht mehr den Stern 4 sieht.

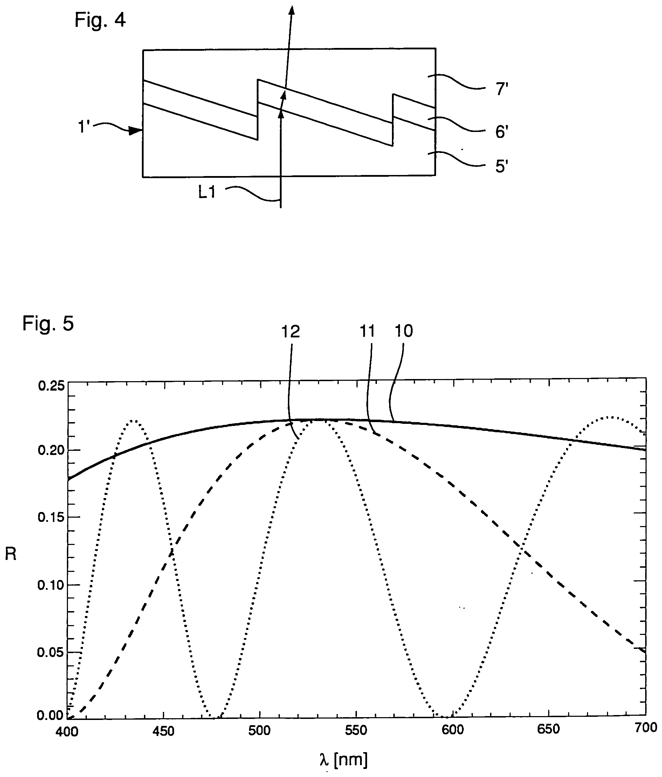

In Fig. 4 ist zur weiteren Erläuterung dieses Durchsichteffektes ein Beispiel eines optisch variablen Elementes 1' gezeigt, bei dem die Brechungsindizes von Träger- und Einbettungsschicht 5', 7' deutlich unterschiedlich sind. In diesem Fall bewirken die Brechungen an den Grenzflächen zwischen der Reflexionsschicht 6' und der Trägerschicht 5' einerseits und der Einbettungsschicht 7' andererseits, dass nach der Transmission das Licht eine andere Ausbreitungsrichtung aufweist. Wenn man durch ein solches Sicherheitselement 1' einen strukturierten Hintergrund betrachtet, führen die Brechungseffekte und die dadurch bedingten Richtungsänderungen zu sichtbaren Verzerrungen, die letztendlich das Motiv des Sicherheitselementes (hier des Sternes 4) sichtbar machen würden.

Daher sind erfindungsgemäß die Trägerschicht 5 und die Einbettungsschicht 7 so gewählt, dass ihre Brechungsindizes im sichtbaren Spektrum gleich sind oder sich nicht um mehr als 0,2 unterscheiden, da bis zu dieser Differenz der Brechungsindizes der beschriebene Effekt des Fensters in Durchsicht noch sicher erreicht wird.

Das erfindungsgemäße optisch variable Element 1 weist somit quasi einen "Antiwasserzeicheneffekt" auf, da in Aufsicht ein Motiv (hier der Stern 4) sichtbar ist und in Durchsicht das Motiv nicht mehr sichtbar ist und somit verschwindet. Man kann diesen optischen Effekt des erfindungsgemäßen optisch variablen Elementes 1 auch als durchsichtiges "Antiwasserzeichen" bezeichnen.

Bei der hier beschriebenen Ausführungsform ist die Schichtdicke der Reflexionsschicht 6 unter Berücksichtigung ihres Brechungsindex so gewählt, dass in Aufsicht der Stern 4 farbig erscheint. Dazu ist es bevorzugt, dass der Brechungsindex der teiltransparenten Reflexionsschicht 6 möglichst stark von dem Brechungsindex der Trägerschicht 5 abweicht. Die Abweichung kann beispielsweise mehr als 0,2, bevorzugt mehr als 0,4 und besonders bevorzugt mehr als 0,6 betragen. Da Prägelacke, die für die transparente Trägerschicht 5 verwendet werden können, in der Praxis oft einen Brechungsindex von 1,5 aufweisen, ist es leichter, eine teiltransparente Reflexionsschicht 6 mit einem deutlich höheren statt einem deutlich niedrigeren Brechungsindex aufzubringen. Daher ist bevorzugt, dass der Brechungsindex der Reflexionsschicht mindestens 1, 7, bevorzugt mindestens 1,9 und besonders bevorzugt größer als 2 ist.

Daher wird für die vorliegende Ausführungsform sowie auch für die nachfolgenden Ausführungsformen davon ausgegangen, dass der Brechungsindex $n_L$ der transparenten Trägerschicht 51,5 und der Brechungsindex $n_R$ der teiltransparenten Reflexionsschicht 6 2,5 beträgt.

Die transparente Einbettungsschicht 7 dient neben ihrer Wirkung für den "Antiwasserzeicheneffekt" auch zum Schutz vor mechanischer und/oder chemischer Beanspruchung und insbesondere vor unbefugter Abformung. Daher ist die von der Reflexionsschicht 6 abgewandte Oberfläche der Einbettungsschicht 7 bevorzugt eben ausgebildet.

Wie in der Darstellung von Fig. 2 gezeigt ist, wird einfallendes Licht L1 sowohl an der Ober- als auch der Unterseite der Reflexionsschicht 6 reflektiert. Dadurch kommt es zu Interferenz der an der Ober- und Unterseite reflektierten Lichtstrahlen, so dass je nach Dicke der Reflexionsschicht 6 weißes oder buntes Licht in die durch die Orientierung der Mikrospiegel 8 vorgegebene Richtung reflektiert wird. Zur Vereinfachung wird im Folgenden von senkrechtem Lichteinfall ausgegangen, wobei die beschriebenen Effekte natürlich auch bei Lichteinfall aus anderen Richtungen auftreten.

Konstruktive Interferenz und ein entsprechend hoher Reflexionsgrad des an den Grenzflächen der Reflexionsschicht 6 reflektierten Lichtes tritt dann auf, wenn die reflektierten Lichtstrahlen einen Gangunterschied von $m\lambda$ aufweisen, wobei $\lambda$ die Wellenlänge des Lichtes bezeichnet und $m$ eine ganze Zahl ist. Der Gangunterschied bei einer Dicke $z$ der Reflexionsschicht 6 ergibt sich aus der doppelten optischen Weglänge durch die Reflexionsschicht 6 $2n_Rz$ sowie einem Phasensprung von $\lambda/2$, der hier an der oberen Grenzfläche auftritt (Übergang vom optisch dünneren in ein optisch dichteres Medium). Damit ergibt sich für die konstruktive Interferenz die folgende Bedingung:

$$m\lambda = 2n_R z + \frac{\lambda}{2}$$

Zur Suche einer für die Wellenlänge $\lambda$ geeigneten Schichtdicke kann man die obige Bedingung nach z auflösen und erhält die folgende Gleichung 1:

$$z = \frac{(m+1/2)}{2n_R}\lambda$$

Da $z$ offensichtlich positiv sein muß, muß $m \geq$ 0 gelten.

Die Tatsache, dass die Reflexionsschicht 6 durch konstruktive Interferenz ein Reflexionsmaximum bei der Wellenlänge einer bestimmten Farbe hat, reicht zur Erzeugung einer Darstellung mit hoher Buntheit allein jedoch nicht aus. Dies soll im Folgenden anhand berechneter Reflexionsspektren und Farbwerten veranschaulicht werden. Zur Bewertung der Farben bzw. Buntheit wird dazu das CIE L*a*b* Farbsystem benutzt und von einer Beleuchtung mit einer D65 Normlichtquelle ausgegangen. Der Farbwert L* gibt dabei die Helligkeit wieder, während a* und b* den Farbort auf einer Rot-Grün- bzw. Blau-Gelb-Achse angeben.

In der beschriebenen Ausführungsform ist die Reflexionsschicht 6 auf eine möglichst hohe Buntheit im Grünen optimiert. Dazu kann man in der obigen Formel für z die Schichtdicke z so wählen, dass sich konstruktive Interferenz beispielsweise bei einer Wellenlänge von 530 nm ergibt. Geht man von $n_R$ 2,5 aus, so ergeben sich für m = 0,1, 2, 3, 4 Schichtdicken z von 53 nm, 159 nm, 265 nm, 371 nm und 477 nm.

In Fig. 5 ist das Reflexionsvermögen bzw. der Reflexionsgrad R entlang der vertikalen Achse in Abhängigkeit der Wellenlänge $\lambda$ für den Bereich von 400 bis 700 nm (entlang der horizontalen Achse) für die Schichtdicken z von 53 nm (Kurve 10), 159 nm (Kurve 11) sowie 477 nm (Kurve 12) gezeigt. Aus diesen drei beispielhaft gezeigten Reflexionsspektren erkennt man, dass mit steigender Schichtdicke z der Reflexionsschicht 6 das Maximum bei einer Wellenlänge von 530 nm immer schärfer wird, wobei bei größeren Schichtdicken weitere Maxima in das sichtbare Spektrum (hier in das dargestellte Spektrum von 400 bis 700 nm) rücken. Ferner erkennt man, dass der Wert des Reflexionsgrades R bei der gewünschten Wellenlänge von 530 nm für alle dargestellten Schichtdicken z der gleiche ist.

Zur Quantifizierung der Buntheit wurden aus diesen Reflexionsspektren L*a*b* Farbwerte bzw. die Buntheit $C_{ab}* = \sqrt{a^{*2} + b^{*2}}$ (im Folgenden auch einfach als C* bezeichnet) bei D65 Normbeleuchtung berechnet.

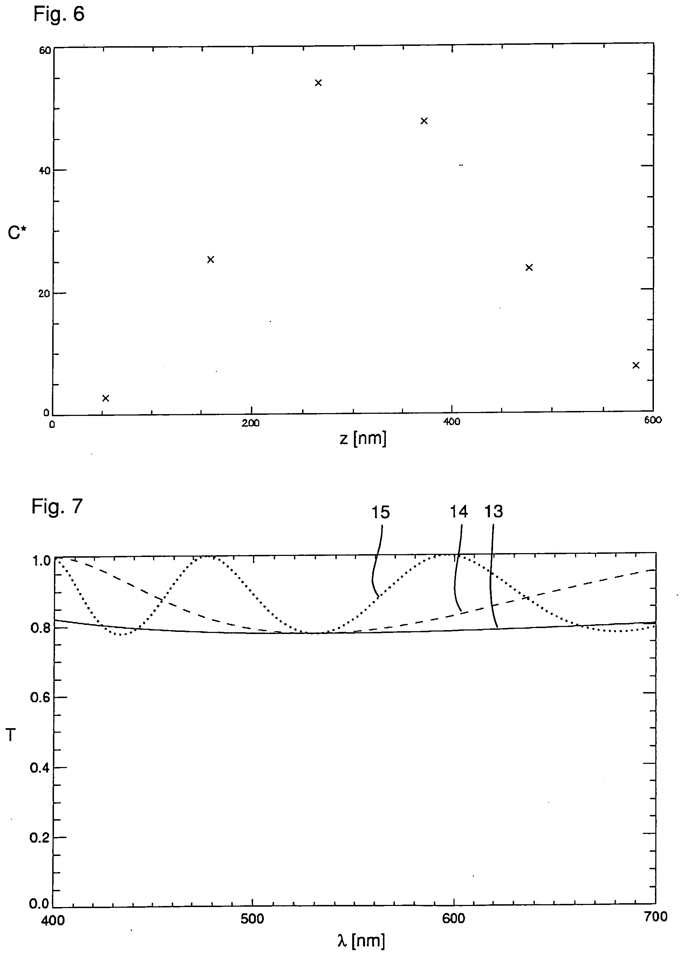

Fig. 6 zeigt die so berechnete Buntheit C* bei Reflexion, wobei entlang der horizontalen Achse die Schichtdicke z in nm aufgetragen und entlang der vertikalen Achse die Buntheit C* aufgetragen ist. Aus der Darstellung von Fig. 6 kann entnommen werden, dass die Buntheit C* mit steigender Schichtdicke z zunächst ansteigt und dann bei Schichtdicken entsprechend m > 2 wieder abfällt. Die bunteste Farbe erhält man hier also bei m = 2 bzw. einer Reflexionsschichtdicke z von 265 nm. Grund für den Anstieg bei kleinen Schichtdicken z ist die in Fig. 5 gezeigte zunehmende Schärfe des Reflexionsmaximums. Bei größeren Schichtdicken z rücken neben dem gewünschten Maximum weitere Reflexionsmaxima in sichtbares Spektrum, die hier in Reflexion zusätzlich unerwünschte Blau- bzw. Rotanteile liefern und die Buntheit wieder reduzieren.

Besonders bunte Farben ergeben sich somit für m zwischen 1 und 4 insbesondere für m = 2 und m = 3. Aus Kostengründen ist dabei insbesondere die dünnere Schicht mit m = 2 interessant. Mit Blick auf das gesamte sichtbare Spektrum zwischen 380 nm und 780 nm sind hier also insbesondere solche Schichtdicken z interessant, für die die Gleichung 1 mit $\lambda$ zwischen 380 nm und 780 nm sowie m zwischen 1 und 4 gilt. Bevorzugt liegt m zwischen 2 und 3. Dies entspricht einer optischen Weglänge $z n_R$ zwischen 285 nm und 1755 nm, bevorzugt zwischen 475 nm und 1365 nm. Berücksichtigt man weiterhin, dass das menschliche Auge am Rand dieses Spektrums wenig empfindlich ist, kann man den bevorzugten Bereich der optischen Weglänge sogar noch etwas enger fassen und etwa zwischen 500 nm und 1100 nm ansetzen.

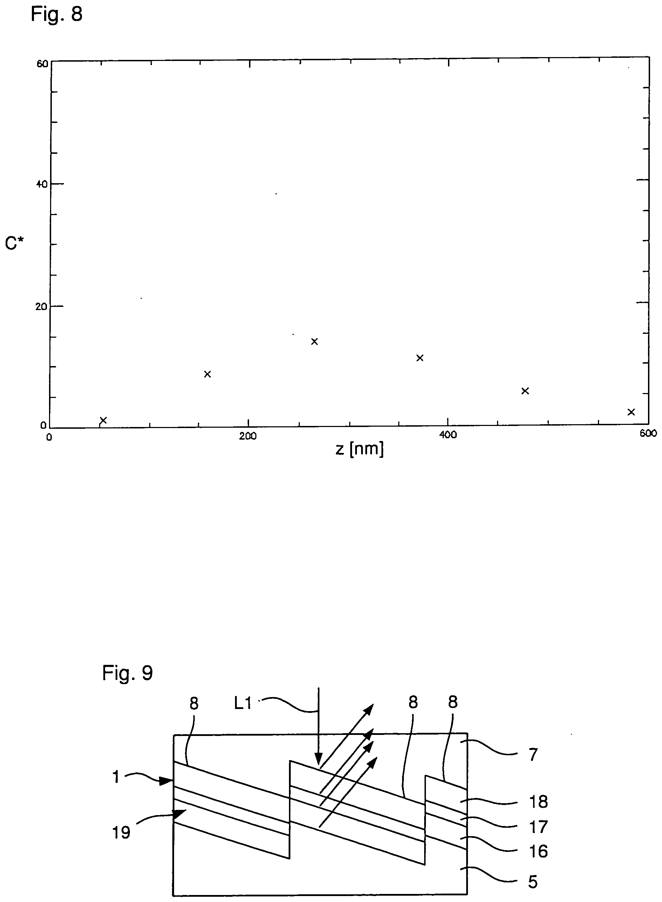

Im Gegensatz zu den in Fig. 5 gezeigten Reflexionsspektren weisen die zugehörigen Transmissionsspektren, die in Fig. 7 dargestellt sind, nur wenig ausgeprägte Maxima und Minima auf. In Fig. 7 ist entlang der horizontalen Achse wiederum die Wellenlänge $\lambda$ von 400 bis 700 nm aufgetragen und entlang der vertikalen Achse der Transmissionsgrad bzw. die Transmission T, wobei die Kurve 13 den Transmissionsgrad für eine Schichtdicke z von 53 nm, die Kurve 14 den Transmissionsgrad T für eine Schichtdicke z von 159 nm und die Kurve 15 den Transmissionsgrad T für eine Schichtdicke z von 477 nm zeigt. Folglich ist die Reflexionsschicht 6 in Durchsicht nahezu farblos und erscheint weitgehend wie eine einfache transparente Folie, was z.B. der Darstellung in Fig. 8 entnommen werden kann. In Fig. 8 ist in gleicher Weise wie in Fig. 6 die Buntheit C* dargestellt, wobei in Fig. 8 jedoch die Buntheit in Transmission und in Fig. 6 die Buntheit in Reflexion gezeigt ist.

Da die Reflexionsschicht 6 im Motivbereich bei dem beschriebenen optisch variablen Element 1 in Durchsicht wie eine einfache transparente Folie erscheint, verschwindet für einen Betrachter nicht nur das zuvor in Reflexion gesehene Motiv (der Stern 4), sondern auch die Farbe der Folie unterscheidet sich von der des in Reflexion gesehenen Motivs, d.h. die Folie erscheint dann weitgehend farblos bzw. in einer anderen Farbe. Dies ist für einen Betrachter ein besonders auffälliger und einprägsamer Effekt, der sich sehr gut für Sicherheitsmerkmale eignet.

Farbigkeit und Helligkeit des in Reflexion sichtbaren Motivs 4 lassen sich gegenüber der bisher beschriebenen Ausführungsform mit der einzelnen Reflexionsschicht weiter verbessern, wenn man statt nur einer einzelnen Reflexionsschicht 6 mehrere Reflexionsschichten benutzt.

Als besonders vorteilhaft haben sich hier Dreifachschichten mit zwei hochbrechenden Schichten 16 und 18 und einer dazwischenliegenden Abstandsschicht 17 erwiesen. Eine schematische Schnittdarstellung einer solchen Dreifachreflexionsschicht 19 ist in Fig. 9 dargestellt.

Die Abstandsschicht 17 kann dabei beispielsweise einen Brechungsindex aufweisen, der dem der Trägerschicht 5 und/oder der Einbettungsschicht 7 entspricht bzw. dazu sehr ähnlich ist. Bei der hier beschriebenen Ausführungsform weist die Abstandsschicht einen Brechungsindex von 1,5 auf. Die Dicke der Abstandsschicht 17 ist wieder so zu wählen, dass konstruktive Interferenz der an ihrer Ober- und an ihrer Unterseite reflektierten Beiträge auftritt. Beispielhaft wird hier eine Dicke von $\lambda/(4 n_L) = 88\ nm$ gewählt.

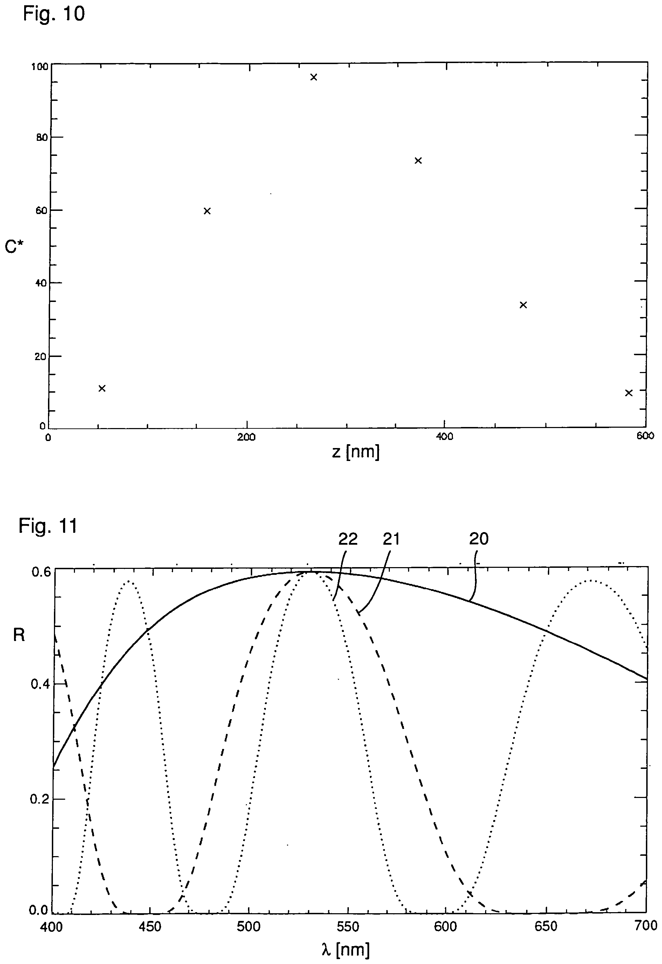

Wie Fig. 10 zu entnehmen ist, in der die Buntheit C* in Reflexion für die Ausführungsform des optisch variablen Elementes 1 von Fig. 9 gezeigt ist, ergibt sich damit eine im Vergleich zu einer einzelnen Reflexionsschicht 6 noch einmal deutlich höhere Buntheit bzw. Croma, die im Optimum bei über 95 liegt (im Vergleich zu lediglich knapp 55 bei einer Einzelreflexionsschicht 6).

In Fig. 10 ist in gleicher Weise wie in Fig. 6 die Buntheit C* entlang der vertikalen Achse und die Schichtdicke z von 0 bis 600 nm entlang der horizontalen Achse aufgetragen, wobei z hier die Schichtdicke der hochbrechenden Schicht 16 sowie der hochbrechenden Schicht 18 ist, die bei der beschriebenen Ausführungsform gleiche Schichtdicken aufweisen. Natürlich können die Schichtdicken der beiden Schichten 16 und 18 auch unterschiedlich sein. Auch der maximale Reflexionsgrad R (hier wieder für 530 nm) für das optisch variable Element 1 gemäß Fig. 9 ist mit nun etwa 0,6, wie in Fig. 11 gezeigt ist, im Vergleich zu etwa 0,22 bei einer einzelnen Reflexionsschicht 6 (Fig. 5) noch einmal deutlich erhöht. In Fig. 11 ist der Reflexionsgrad R entlang der vertikalen Achse und die Schichtdicken z von 53 nm (Kurve 20), 265 nm (Kurve 21) und 477 nm (Kurve 22) der beiden hochbrechenden Schichten 16 und 18 für den Wellenlängenbereich von 400 bis 700 nm entlang der horizontalen Achse aufgetragen. Die Abstandsschicht 17 weist die Dicke von 88 nm auf.

Der Aufbau der Reflexionsschicht 19 als Dreifachschicht mit zwei hochbrechenden Schichten 16 und 18 und der dazwischenliegenden Abstandsschicht 17 ist somit äußerst vorteilhaft, da eine deutliche Qualitätssteigerung gegenüber einer einzelnen Reflexionsschicht 6 mit relativ geringem Mehraufwand bei der Herstellung erreicht werden kann.

Bei den bisher beschriebenen Ausführungsformen wurde jeweils eine Optimierung hinsichtlich der Reflexion im Grünen durchgeführt. Natürlich ist man darauf nicht beschränkt. Das erfindungsgemäße Konzept ist auch auf andere Farben übertrag- bzw. anwendbar.

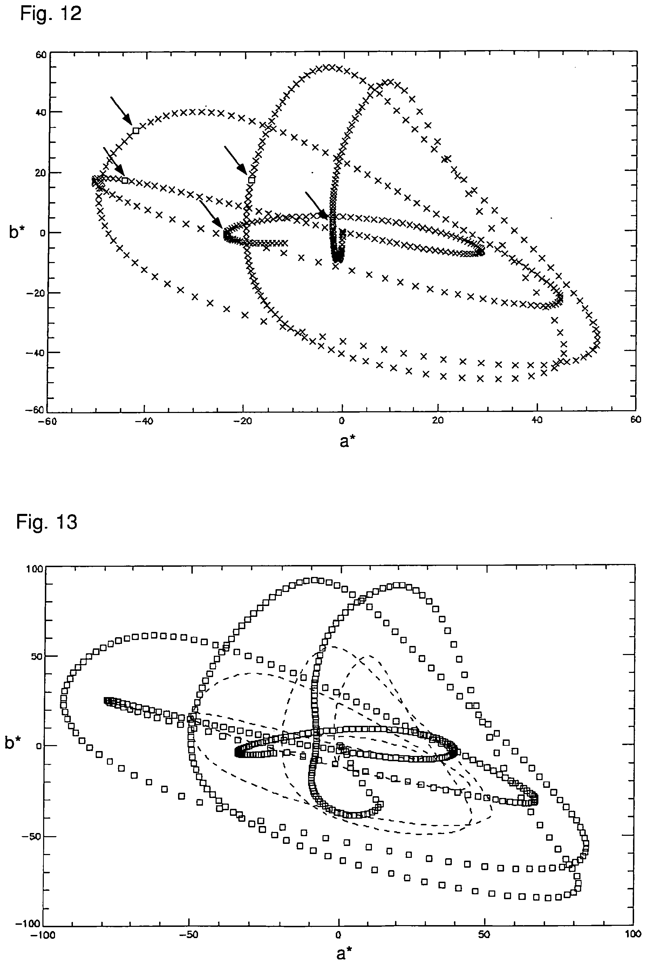

So sind in Fig. 12 für die Ausführungsform gemäß Fig. 2 die Werte für a* entlang der horizontalen Achse und für b* entlang der vertikalen Achse für Schichtdicken z der Reflexionsschicht 6 zwischen 0 und 500 nm in 1 nm Schritten aufgetragen, wobei die eingezeichneten Pfeile die oben genannten Schichtdicken z von 53 nm, 159 nm, 265 nm, 371 nm und 477 nm für ein Reflexionsmaximum bei 530 nm (im Grünen) anzeigen.

In Fig. 13 ist eine entsprechende Darstellung wie in Fig. 12 für die Ausführungsform gemäß Fig. 9 gezeigt, wobei die Abstandsschicht 17 eine Schichtdicke von 88 nm aufweist.

Wie man den Darstellungen von Fig. 12 und 13 entnehmen kann, können Farben aller Farbwinkel mit hoher Buntheit erzeugt werden. So stellten Punkte in Richtung der positiven a*-Achse Rottöne, Punkte in Richtung der negativen a*-Achse Grüntöne, Punkte in Richtung der positiven b*-Achse Gelbtöne und Punkte in Richtung der negativen b*-Achse Blautöne dar. Dazwischen ergeben sich entsprechende Mischfarben. Zur Optimierung eines bestimmten Farbtons kann ferner die Dicke der Abstandsschicht 17 optimiert werden.

An dieser Stelle sei darauf hingewiesen, dass die in Aufsicht sichtbaren Farben auch vom Reflexionswinkel abhängen und einen Kippeffekt aufweisen können. Hochbrechende Reflexionsschichten zeigen dabei geringere Farbkippung als niedrigbrechende Reflexionsschichten. Je nach Anwendung kann ein deutlicher Farbkippeffekt erwünscht oder unerwünscht sein. In Abhängigkeit davon kann beispielsweise die Brechzahl der Reflexionsschicht gewählt werden.

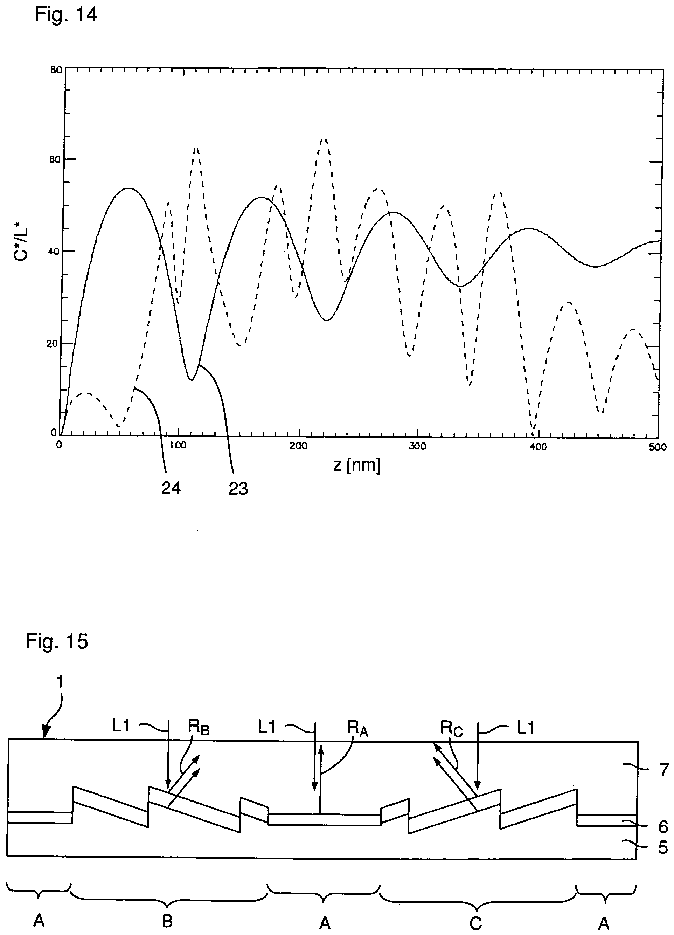

Ferner kann die Schichtdicke der Reflexionsschicht 6 statt im Hinblick auf eine besonders bunte auch im Hinblick auf eine möglichst weiße Darstellung optimiert werden. In Fig. 14 ist für die Ausführungsform des optisch variablen Elementes 1 gemäß Fig. 2 entlang der vertikalen Achse die Helligkeit L* (Kurve 23) und die Buntheit C* (Kurve 24) bei Reflexion in Abhängigkeit der Schichtdicke z von 0 bis 500 nm entlang der horizontalen Richtung dargestellt. Besonders vorteilhaft ist eine Schichtdicke z um 50 nm. Hier liegt eine große Helligkeit bei sehr niedriger Buntheit vor, was in der Praxis sehr helle weiße Darstellungen bewirkt. Diese Schichtdicke entspricht etwa einer optischen Weglänge $n_R z$ von etwa 125 nm. Damit liegt nach obiger Formel mit m = 0 ein breites Maximum bei etwa 500 nm vor, d.h. in der Mitte des sichtbaren Spektrums. Allgemein lassen sich also mit Schichtdicken entsprechend einer optischen Weglänge $n_R z$ um 125 nm besonders helle weiße Darstellungen erreichen.

Durch die Verwendung von zwei Reflexionsschichten 16 und 18 mit etwa 50 nm Dicke und einem Brechungsindex von 2,5, die von einer Abstandsschicht 17 mit Brechungsindex 1,5 und einer Dicke von 88 nm getrennt sind, lässt sich auch bei einem Aufbau gemäß Fig. 9 (Reflexionsschicht 19 mit Dreischichtaufbau) die Helligkeit noch einmal deutlich steigern.

Die teiltransparente Reflexionsschicht 6 sowie die hochbrechenden Schichten 16 und 18 können insbesondere durch hochbrechende Dielektrika, wie z.B. $TiO_2$ oder ZnS verwirklicht sein. Für die Abstandsschicht 17 mit geringerem Brechungsindex kann beispielsweise $SiO_2$ oder $MgF_2$ verwendet werden.

Für die optische Wirkung sind in erster Linie die Unterschiede im Brechungsindex und weniger die absoluten Werte von Bedeutung. Anstelle hochbrechender Reflexionsschichten 6,16,18 in einem niedrigbrechenden Lack 5, 7 können im Prinzip auch niedrigbrechende Reflexionsschichten in hochbrechenden Lacken benutzt werden. So sind im Stand der Technik insbesondere Lacke mit einem Brechungsindex von 1,8 bekannt, die beispielsweise mit einer Reflexionsschicht aus $MgF_2$ beschichtet werden könnten. Die Abstandsschicht könnte dann eine hochbrechende Schicht aus beispielsweise ZnS sein. Darüber hinaus können auch dielektrische Polymere als Reflexionsschicht(en) bzw. Abstandsschicht(en) eingesetzt werden.

Ferner können die Mikrospiegel 8 bereichsweise mit unterschiedlichen Reflexionsschichten beschichtet sein. Insbesondere können die Reflexionsschichten bereichsweise ausgespart sein und/oder in unterschiedlicher Schichtdicke vorliegen. Dadurch lassen sich insbesondere auch mehrfarbige Ansichten und/oder ein Wechsel zwischen Ansichten mit unterschiedlichen Farben realisieren. Eine Möglichkeit zur Realisierung bereichsweise unterschiedlicher Reflexionsschichten sind Waschverfahren, bei denen beispielsweise zunächst eine Waschfarbe auf die Prägelacke bzw. gegebenenfalls bereits vorhandene untere Reflexionsschichten gedruckt wird, dann die Reflexionsschicht vollflächig aufgedampft wird und anschließend die Waschfarbe wieder heruntergewaschen wird, wobei die Beschichtung auf den vorher mit der Waschfarbe bedeckten Bereichen ebenfalls mit abgetragen wird.

Das erfindungsgemäße optisch variable Element 1 kann eine Vielzahl verschiedener optischer Effekte zeigen. Die optischen Effekte können beispielsweise eine 3D-Wölbung, ein 3D-Stereogramm, (Multi-)Kippbilder und/oder kinematische Effekte enthalten.

In Fig. 15 ist eine Schnittdarstellung einer Ausführungsform des optisch variablen Elementes 1 gezeigt, bei dem das Element 1 drei Bereiche A, B und C aufweist. In jedem dieser Bereiche befinden sich Mikrospiegel 8, die einfallendes Licht L1 in jeweils vorgegebene Richtungen $R_A$, $R_B$ und Rc reflektieren. Bei senkrecht einfallendem Licht L1 leuchten die Bereiche A, B und C jeweils aus der zugehörigen Betrachtungsrichtung $R_A$-$R_C$ in der durch die Reflexionsschicht 6 gegebenen Farbe hell auf. Dadurch ist es z.B. möglich, dass man aus den verschiedenen Betrachtungsrichtungen $R_A$-$R_C$ unterschiedliche Motive wahrnimmt. Die Bereiche A-C können ineinander verschachtelt sein.

Damit sich beliebige Motive so darstellen lassen, dass nicht aus bestimmten Richtungen in Aufsicht eine Negativdarstellung sichtbar wird, kann die Reflexionsschicht 6 beispielsweise bereichsweise ausgelassen werden. Alternativ zur Aussparung der Reflexionsschicht 6 kann in Bereichen, die aus keiner der möglichen Betrachtungsrichtungen $R_A$-$R_C$ in Aufsicht hell aufleuchten sollen, statt der Mikrospiegel 8 eine Antireflexstruktur (nicht gezeigt), insbesondere Sub-Wellenlängengitter oder Mottenaugenstrukturen, geprägt werden. Ein solches Verfahren ist besonders vorteilhaft, da keine zusätzlichen Arbeitsschritte zur Aussparung der Reflexionsschicht nötig sind und Antireflexstrukturen mit hoher Auflösung registergenau im gleichen Arbeitsgang neben Mikrospiegeln 8 geprägt werden können.

Das erfindungsgemäße optisch variable Element kann insbesondere in einem transparenten Bereich eines Wertdokumentes, insbesondere einer Banknote, eingesetzt werden. Alternativ kann es jedoch auch auf einem hellen oder dunklen Hintergrund plaziert werden. Vor einem dunklen Hintergrund erscheinen die Darstellungen in Aufsicht besonders hell und kontrastreich. Da sich jedoch ein dunkler Hintergrund nicht in jedes Banknotendesign integrieren lässt, kann das optisch variable Element 1 so ausgebildet werden, dass das Motiv in Aufsicht so hell wahrnehmbar ist, dass es auch vor einem weißen oder mit einem beliebigen Motiv bedruckten Hintergrund noch ausreichend auffällt.

Das erfindungsgemäße optisch variable Element 1 kann auch als Sicherheitsfaden ausgebildet sein. Ferner ist es möglich, das optisch variable Element 1 direkt auf dem Wertdokument auszubilden. So kann ein direkter Druck mit anschließender Prägung des optisch variablen Elements 1 auf ein Polymersubstrat durchgeführt werden, um beispielsweise bei Kunststoffbanknoten ein erfindungsgemäßes Sicherheitselement auszubilden. Das erfindungsgemäße optisch variable Element 1 kann in verschiedensten Substraten ausgebildet werden. Insbesondere kann es in oder auf einem Papiersubstrat, einem Papier mit Synthesefasern, d.h. Papier mit einem Anteil x polymeren Materials im Bereich von 0 < x < 100 Gew.-%, einer Kunststofffolie, z. B. einer Folie aus Polyethylen (PE), Polyethylenterephthalat (PET), Polybutylenterephthalat (PBT), Polyethylennaphthalat (PEN), Polypropylen (PP) oder Polyamid (PA), oder einem mehrschichtigem Verbund, insbesondere einem Verbund mehrerer unterschiedlicher Folien (Kompositverbund) oder einem Papier-Folien-Verbund (Folie/Papier/Folie oder Papier/Folie/Papier), wobei das optisch variable Element in oder auf oder zwischen jeder der Schichten eines solchen mehrschichtigen Verbunds vorgesehen werden kann, ausgebildet werden.

Bezugszeichenliste

| 1 | optisch variables Element |
|---|---|
| 2 | Fenster |
| 3 | Banknote |
| 4 | Stern |
| 5 | transparente Trägerschicht |
| 6 | teiltransparente Reflexionsschicht |
| 7 | transparente Einbettungsschicht |
| 8 | Mikrospiegel |
| 10-15 | Kurve |
| 16 | hochbrechende Schicht |
| 17 | Abstandsschicht |
| 18 | hochbrechende Schicht |
| 19 | Reflexionsschicht |
| 20-24 | Kurve |
| L1 | einfallendes Licht |
| R1, R2 | reflektiertes Licht |
| B1 | Blickrichtung |
| P1 | Doppelpfeil |
| R | Reflexionsgrad |
| T | Transmissionsgrad |
| A, B, C | Bereich |
| $R_A$, $R_B$, $R_C$ | Richtung |

**Patentansprüche**

1. Optisch variables Element (1), insbesondere Sicherheitselement, mit einer transparenten Trägerschicht (5),
einer zumindest teiltransparenten Reflexionsschicht (6), die auf der Trägerschicht (5) gebildet ist,
und einer transparenten Einbettungsschicht (7), die auf der Reflexionsschicht (6) gebildet ist,
wobei die Reflexionsschicht (6) in einem Motivbereich derart strukturiert ist, dass sie eine Vielzahl von teiltransparenten Mikrospiegeln (8) bildet, die aufgrund von gerichteter Reflexion von aus einer Richtung (L1) einfallendem Licht bei Aufsicht auf den Motivbereich aus einer Blickrichtung (B1) ein wahrnehmbares Motiv darbieten, wobei die minimalen lateralen Abmessungen der Mikrospiegel mindestens 5 $\mu$m betragen,
und wobei sich die Brechungsindizes der Trägerschicht und der Einbettungsschicht (5,7) im sichtbaren Spektrum um nicht mehr als 0,2 unterscheiden, damit das in Aufsicht wahrnehmbare Motiv in Durchsicht des Motivbereiches nicht zu erkennen ist.

2. Element nach Anspruch 1, bei dem sich die Brechungsindizes der Trägerschicht und der Einbettungsschicht im sichtbaren Spektrum um nicht mehr als 0,1 und insbesondere um nicht mehr als 0,05 unterscheiden.

3. Element nach Anspruch 1 oder 2, bei dem die der Reflexionsschicht abgewandte Oberseite der Einbettungsschicht nicht dem Relief der Mikrospiegel folgt.

4. Element nach einem der obigen Ansprüche, bei dem die Reflexionsschicht eine dielektrische Schicht ist, deren Brechungsindex sich in zumindest einem Teil des sichtbaren Spektrums jeweils um mehr als 0,2 vom Brechungsindex der Trägerschicht und vom Brechungsindex der Einbettungsschicht unterscheidet, wobei bevorzugt der Brechungsindex der Reflexionsschicht in zumindest einem Teil des sichtbaren Spektrums sich jeweils vom Brechungsindex der Trägerschicht und vom Brechungsindex der Einbettungsschicht um mehr als 0,3 und besonders bevorzugt um mehr als 0,5 unterscheidet.

5. Element nach einem der obigen Ansprüche, bei dem die Vielzahl von teiltransparenten Mikrospiegeln so ausgebildet ist, dass aufgrund von gerichteter Reflexion von einfallendem Licht bei Aufsicht auf den Motivbereich aus unterschiedlichen Blickrichtungen mindestens zwei verschiedene Motive dargeboten werden.

6. Element nach einem der obigen Ansprüche, bei dem die minimalen lateralen Abmessungen der Mikrospiegel im Bereich zwischen 10 μm und 300 μm liegen.

7. Element nach einem der obigen Ansprüche, bei dem die Dicke der Reflexionsschicht so gewählt ist, dass aufgrund von Interferenz des an den Grenzflächen der Reflexionsschicht reflektierten Lichtes das in Aufsicht wahrnehmbare Motiv farbig dargeboten ist.

8. Element nach einem der obigen Ansprüche, bei dem die Schichtdicke z der Reflexionsschicht für eine gewünschte Wellenlänge $\lambda$ so gewählt ist, dass die folgende Gleichung 

$$z = \frac{(m+1/2)}{2n_R}\lambda$$

erfüllt ist, wobei $m$ ein ganzzahliger Wert von 1 bis 4 und $n_R$ der Brechungsindex der Reflexionsschicht ist, wobei bevorzugt die obige Gleichung für $z$ für $m = 2$ erfüllt ist.

9. Element nach einem der Ansprüche 7 bis 8, bei dem die Reflexionsschicht in Reflexion eine Buntheit $C_{ab}* = \sqrt{a*^2 + b*^2}$ von mehr als 40, bevorzugt mehr als 50 und besonders bevorzugt von mehr als 60 aufweist.

10. Element nach einem der Ansprüche 7 bis 9, bei dem die Reflexionsschicht eine Schichtdicke entsprechend einer optischen Weglänge zwischen 285 nm und 1755 nm, bevorzugt zwischen 475 nm und 1365 nm und besonders bevorzugt zwischen 500 nm und 1100 nm aufweist.

11. Element nach einem der Ansprüche 7 bis 10, bei dem die Reflexionsschicht durch drei Schichten gebildet ist, wovon die beiden äußeren jeweils eine Schichtdicke entsprechend einer optischen Weglänge zwischen 285 nm und 1755 nm, bevorzugt zwischen 475 nm und 1365 nm und besonders bevorzugt zwischen 500 nm und 1100 nm aufweisen.

12. Element nach einem der obigen Ansprüche, bei dem die Reflexionsschicht durch eine oder mehrere hochbrechende dielektrische Schicht(en) mit einem Brechungsindex von > 1,7, bevorzugt > 1,8 und besonders bevorzugt > 2 gebildet ist.

13. Element nach einem der Ansprüche 1 bis 6, bei dem die Dicke der Reflexionsschicht so gewählt ist, dass aufgrund von Interferenzen des an den Grenzflächen der Reflexionsschicht reflektierten Lichtes das in Aufsicht wahrnehmbare Motiv weiß dargeboten wird, wobei insbesondere die Dicke der Reflexionsschicht so gewählt ist, dass die entsprechende optische Weglänge zwischen 115 und 135 nm liegt.

14. Element nach einem der obigen Ansprüche, bei dem die Reflexionsschicht einen Dreischichtaufbau mit zwei Außenschichten und einer dazwischen angeordneten Abstandsschicht aufweist, wobei die Brechungsindizes der Außenschichten gleich sind, wobei insbesondere die Brechungsindizes der Außenschichten größer sind als der Brechungsindex der Abstandsschicht.

15. Datenträger mit einem optisch variablen Element (1) nach einem der obigen Ansprüche.

**Claims**

1. An optically variable element (1), in particular security element, having a transparent carrier layer (5), an at least partly transparent reflective layer (6) which is formed on the carrier layer (5), and a transparent embedding layer (7) which is formed on the reflective layer (6), wherein the reflective layer (6) is structured in a motif region such that said layer forms a multiplicity of partly transparent micromirrors (8) which present a perceptible motif upon plan viewing of the motif region from one viewing direction (B1) due to specular reflection of incident light from one direction (L1), wherein the minimal lateral dimensions of the micromirrors amount to at least 5 μm, and wherein the refractive indices of the carrier layer and of the embedding layer (5, 7) differ in the visible spectrum by no more than 0.2 in order that the motif perceptible in plan view is not recognizable upon transmission viewing of the motif region.

2. The element according to claim 1, wherein the refractive indices of the carrier layer and of the embedding layer differ in the visible spectrum by no more than 0.1 and in particular by no more than 0.05.

3. The element according to claim 1 or 2, wherein the upper side of the embedding layer facing away from the reflective layer does not follow the relief of the micromirrors.

4. The element according to any of the above claims, wherein the reflective layer is a dielectric layer whose refractive index differs in at least a part of the visible spectrum by more than 0.2 from the refractive index of the carrier layer and from the refractive index of the embedding layer, respectively, wherein preferably the refractive index of the reflective layer differs in at least a part of the visible spectrum by more than 0.3, and particularly preferably by more than 0.5, from the refractive index of the carrier layer and from the refractive index of the embedding layer, respectively.

5. The element according to any of the above claims, wherein the multiplicity of partly transparent micromirrors is so configured that at least two different motifs are presented upon plan viewing of the motif region from different viewing directions due to specular reflection of incident light.

6. The element according to any of the above claims, wherein the minimal lateral dimensions of the micromirrors lie in the region between 10 $\mu$m and 300 $\mu$m.

7. The element according to any of the above claims, wherein the thickness of the reflective layer is so chosen that the motif perceptible in plan view is presented in color due to interference of the light reflected on the boundary surfaces of the reflective layer.

8. The element according to any of the above claims, wherein the layer thickness z of the reflective layer is chosen for a desired wavelength $\lambda$ such that the following equation

$$z = \frac{(m+1/2)}{2n_R}\lambda$$

is satisfied, where $m$ is an integral value from 1 to 4 and $n_R$ is the refractive index of the reflective layer, wherein preferably the above equation for $z$ is satisfied for $m = 2$.

9. The element according to any of claims 7 to 8, wherein the reflective layer has in reflection a chroma

$$C_{ab}^* = \sqrt{a^{*2} + b^{*2}}$$

of more than 40, preferably more than 50, and particularly preferably more than 60.

10. The element according to any of claims 7 to 9, wherein the reflective layer has a layer thickness in accordance with an optical path length between 285 nm and 1755 nm, preferably between 475 nm and 1365 nm, and particularly preferably between 500 nm and 1100 nm.

11. The element according to any of claims 7 to 10, wherein the reflective layer is formed by three layers, the outer two of which respectively have a layer thickness in accordance with an optical path length between 285 nm and 1755 nm, preferably between 475 nm and 1365 nm, and particularly preferably between 500 nm and 1100 nm.

12. The element according to any of the above claims, wherein the reflective layer is formed by one or several high-refractive dielectric layer(s) having a refractive index of > 1.7, preferably > 1.8, and particularly preferably > 2.

13. The element according to any of claims 1 to 6, wherein the thickness of the reflective layer is so chosen that the motif perceptible in plan view is presented white due to interferences of the light reflected on the boundary surfaces of the reflective layer, wherein in particular the thickness of the reflective layer is so chosen that the corresponding optical path length lies between 115 and 135 nm.

14. The element according to any of the above claims, wherein the reflective layer has a three-layer construction with two outer layers and a spacer layer arranged therebetween, with the refractive indices of the outer layers being equal, wherein in particular the refractive indices of the outer layers are greater than the refractive index of the spacer layer.

15. A data carrier having an optically variable element (1) according to any of the above claims.

**Revendications**

1. Élément optiquement variable (1), en particulier élément de sécurité, comportant une couche porteuse transparente (5),
une couche réfléchissante au moins partiellement transparente (6) qui est constituée sur la couche porteuse (5),
et une couche d'intégration transparente (7) qui est constituée sur la couche réfléchissante (6),
la couche réfléchissante (6) étant structurée dans une zone à motifs de manière à former une multitude de micro-miroirs partiellement transparents (8) qui, suite à la réflexion dirigée de lumière incidente depuis une direction (L1), en élévation au-dessus de la zone à motifs depuis une direction d'observation (B1), représentent un motif perceptible, les dimensions latérales minimales des micro-miroirs étant de moins de 5 $\mu$m,
et les indices de réfraction de la couche porteuse et de la couche d'intégration (5, 7) ne se différenciant dans le spectre visible pas de plus de 0,2 afin que le motif perceptible en élévation ne soit pas détectable vu à travers la zone à motifs.

2. Élément selon la revendication 1, dans lequel les indices de réfraction de la couche porteuse et de la couche d'intégration ne se différencient pas de plus de 0,1 et en particulier pas plus de 0,05 dans le spectre visible.

3. Élément selon la revendication 1 ou 2, dans lequel la face supérieure détournée de la couche réfléchissante de la couche d'intégration ne suit pas le relief des micro-miroirs.

4. Élément selon une des revendications précédentes, dans lequel la couche réfléchissante est une couche diélectrique dont l'indice de réfraction se différencie dans au moins une partie du spectre visible respectivement de plus de 0,2 de l'indice de réfraction de la couche porteuse et de l'indice de réfraction de la couche d'intégration, l'indice de réfraction de la couche réfléchissante se différenciant de préférence dans au moins une partie du spectre visible respectivement de l'indice de réfraction de la couche porteuse et de l'indice de réfraction de la couche d'intégration de plus de 0,3 et particulièrement préférentiellement de plus de 0,5.

5. Élément selon une des revendications précédentes, dans lequel la multitude de micro-miroirs partiellement transparents est réalisée de manière à ce que, suite à la réflexion dirigée de lumière incidente, vu en élévation au-dessus de la zone à motifs à partir de différentes directions d'observation, au moins deux motifs différents soient représentés.

6. Élément selon une des revendications précédentes, dans lequel les dimensions latérales minimales des micro-miroirs se situent dans la plage de 10 $\mu$m à 300 $\mu$m.

7. Élément selon une des revendications précédentes, dans lequel l'épaisseur de la couche réfléchissante est sélectionnée de manière à ce que, en raison de l'interférence de la lumière réfléchie sur les surfaces limites de la couche réfléchissante, le motif perceptible en élévation soit représenté en couleurs.

8. Élément selon une des revendications précédentes, dans lequel l'épaisseur de couche z de la couche réfléchissante pour une longueur d'onde souhaitée $\lambda$ est sélectionnés de manière à ce que l'équation

$$z = \frac{(m+1/2)}{2n_R}\lambda$$

suivante soit remplie, *m* étant une valeur en nombre entier de 1 à 4, et $n_R$ l'indice de réfraction de la couche réfléchissante, l'équation ci-dessus étant de préférence remplie pour *z* pour *m* = 2.

9. Élément selon une des revendications 7 à 8, dans lequel la couche réfléchissante présente en réflexion une variété de couleurs $C_{ab}{}^* = \sqrt{a^{*2} + b^{*2}}$ de plus de 40, de préférence de plus de 50 et particulièrement préférentiellement de plus de 60.

10. Élément selon une des revendications 7 à 9, dans lequel la couche réfléchissante présente une épaisseur de couche correspondant à une longueur de parcours optique comprise entre 285 nm et 1755 nm, de préférence entre 475 nm et 1365 nm et particulièrement préférentiellement entre 500 nm et 1100 nm.

11. Élément selon une des revendications 7 à 10, dans lequel la couche réfléchissante est constituée de trois couches, dont les deux couches extérieures présentent respectivement une épaisseur de couche correspondant à une longueur de parcours optique comprise entre 285 nm et 1755 nm, de préférence entre 475 nm et 1365 nm et particulièrement préférentiellement entre 500 nm et 1100 nm.

12. Élément selon une des revendications précédentes, dans lequel la couche réfléchissante est constituée par une ou plusieurs couches diélectriques à outre réfraction ayant un indice de réfraction > 1,7, de préférence > 1,8 et particulièrement préférentiellement > 2.

13. Élément selon une des revendications 1 à 6, dans lequel l'épaisseur de la couche réfléchissante est sélectionnée de manière à ce que, en raison d'interférences de la lumière réfléchie sur les surfaces limites de la couche réfléchissante, le motif perceptible en élévation soit représenté en blanc, l'épaisseur de la couche réfléchissante étant en particulier sélectionnée de manière à ce que la longueur de parcours optique correspondante se situe entre 115 et 135 nm.

14. Élément selon une des revendications précédentes, dans lequel la couche réfléchissante présente une structure à trois couches avec deux couches extérieures et une couche d'espacement disposée entre elles, les indices de réfraction des couches extérieures étant égaux, les indices de réfraction des couches extérieures étant en particulier supérieurs à l'indice de réfraction de la couche d'espacement.

15. Support de données comportant un élément optiquement variable (1) selon une des revendications précédentes.

Fig. 1

Fig. 2

Fig. 3

Fig. 4

Fig. 5

Fig. 6

Fig. 7

Fig. 8

Fig. 9

Fig. 10

Fig. 11

**Fig. 12**

**Fig. 13**

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1547807 A

- US 20070291362 A